# EUROPÄISCHE PATENTANMELDUNG

(11) **EP 4 699 792 A1**
(43) Veröffentlichungstag der Anmeldung: **25.02.2026**
(21) Anmeldenummer: 25195893.0
(22) Anmeldetag: 14.08.2025
(51) Int. Cl.: B29C 70/24, B29D 99/00, B60B 5/02, B60B 21/06, B29C 70/22, B29L 31/30, B29L 31/32

(54) **VERFAHREN ZUR HERSTELLUNG EINER FAHRRADFELGE UND FAHRRADFELGE**

(30) Priorität: 19.08.2024 DE 102024123581
(71) Anmelder: DT Swiss AG, 2504 Biel (CH)
(72) Erfinder: Henig, Andreas, CH-2504 Biel (CH); Schwarz, Anne Franziska, CH-2544 Bettlach (CH)
(74) Vertreter: BSB Patentanwälte Schütte & Engelen Partnerschaft mbB

(57) **Zusammenfassung**

Fahrradfelge (50) und Verfahren zur Herstellung einer Fahrradfelge (50) und Fahrradfelge (50), wobei die Fahrradfelge (50) einen Felgenkörper (1) mit wenigstens einem darin integrierten Hohlraum (2) umfasst. Der Hohlraum (2) ist ringsum von einer umgebenden Komponentenwand (4) umschlossen. Der Felgenkörper (1) erstreckt sich in einer Felgenebene (52) über einen Umfang von 360° quer zu seiner Drehachse (53).

Der Hohlraum (2) bildet eine Hohlkammer (3) in dem Felgenkörper (1). Es werden mehrere Komponentenwände (4) gebildet, wobei die Komponentenwände zwei seitliche Felgenflanken (54, 55), einen radial inneren Felgenboden (55) und ein radial äußeres Felgenbett (56) umfassen, welche die Hohlkammer (3) begrenzen. Es wird eine Tragstruktur (5) des Felgenkörpers (1) durch wenigstens eine Faserstruktur (11-14) gebildet. Zur Herstellung der Faserstruktur (11-14) wird ein Faserbündel (15) auf einer Trägerschicht (20) mit Fadenelementen (19) befestigt und auf der Trägerschicht (20) hin und her geführt, um eine Grundfaserlage (21) der Faserstruktur (11-14) zu bilden. Die Faserstruktur (11-14) wird in einer Werkzeugform (40) drapiert. Es wird eine Fülleinheit (55) in der Werkzeugform (40) platziert, sodass die Fülleinheit (45) das Volumen für den Hohlraum (2) freihält und der Hohlraum (2) von der Komponentenwand (4) umgeben wird.

## Beschreibung

Die vorliegende Erfindung betrifft ein Verfahren zur Herstellung einer Fahrradfelge mit einem Felgenkörper und wenigstens einem darin integrierten Hohlraum, eine über ein solches Verfahren hergestellte Fahrradfelge und eine Fahrradfelge mit einem Felgenkörper mit wenigstens einem darin integrierten Hohlraum. In allen Ausgestaltungen betrifft die Erfindung ein Verfahren zur Herstellung einer Fahrradfelge und eine Fahrradfelge, wobei die Fahrradfelge wenigstens teilweise aus einem Faserverbundwerkstoff besteht.

Im Stand der Technik sind verschiedenste Fahrradfelgen bekannt geworden, die über einen Hohlraum in Form einer Hohlkammer verfügen. Solche Fahrradfelgen werden oft auch als Hohlkammerfelgen bezeichnet.

Fahrradfelgen werden regelmäßig aus leichten Materialien und zunehmend aus Faserverbundwerkstoffen gefertigt. Bei der Herstellung von Fahrradfelgen aus Faserverbundwerkstoffen ist es möglich, dass in einen Hohlraum einer Werkzeugform das Matrixmaterial zusammen mit Kurzfasern zur Verstärkung eingespritzt wird. Das ermöglicht eine weitgehend maschinelle und automatisierte Fertigung mit einer gleichbleibenden Fertigungsqualität. Nachteilig ist aber, dass die Stabilität und Festigkeit der so erzeugten Fahrradfelgen begrenzt ist. Das liegt wesentlich an den kurzen Faserstücken. Das kann dadurch behoben werden, dass die Wandstärke vergrößert wird und somit insgesamt mehr Material verwendet wird. Dadurch steigt aber wiederum das Gesamtgewicht.

Eine andere Möglichkeit der Herstellung von Fahrradfelgen aus Faserverbundwerkstoffen besteht darin, sogenannte Prepregs zu verwenden, wobei Gewebestücke mit Harzmaterial imprägniert werden. Eine Vielzahl einzelner Gewebestücke wird dann in die Form eingelegt und dort drapiert. Dadurch kann lokal eine geeignete Wandstärke erzeugt werden, die der jeweiligen Belastung Rechnung trägt. Durch das Drapieren der Einzelstücke in der Form kann eine hohe Qualität und Belastbarkeit erzielt werden. Nachteilig bei diesem Verfahren sind die relativ hohen Kosten für das verwendete Prepreg-Material, die begrenzte Lagerfähigkeit der Prepregs vor dem Verarbeiten und auch der hohe manuelle Aufwand bei der Fertigung, der die Kosten weiter erhöht.

Es ist deshalb die Aufgabe der vorliegenden Erfindung, ein Verfahren zur Herstellung einer Fahrradfelge und eine Fahrradfelge zur Verfügung zu stellen, welche einen Komponentenkörper als Felgenkörper mit wenigstens einem darin integrierten Hohlraum umfasst, wobei der Felgenkörper wenigstens teilweise aus einem Faserverbundwerkstoff besteht bzw. gefertigt wird.

Diese Aufgabe wird gelöst durch ein Verfahren mit den Merkmalen des Anspruchs 1 und durch eine Fahrradfelge mit den Merkmalen des Anspruchs 15. Weitere Vorteile und Merkmale der vorliegenden Erfindung ergeben sich aus der allgemeinen Beschreibung und den Ausführungsbeispielen.

Ein erfindungsgemäßes Verfahren dient zur Herstellung einer Fahrradfelge, wobei die Fahrradfelge (wenigstens) einen (Komponentenkörper als) Felgenkörper mit wenigstens einem darin integrierten Hohlraum umfasst. Der Hohlraum wird ringsum von wenigstens einer umgebenden Komponentenwand umschlossen. Der Felgenkörper erstreckt sich in einer Felgenebene über einen Umfang von 360° quer zu seiner Drehachse. Der Hohlraum bildet eine Hohlkammer in dem Felgenkörper. Es werden mehrere Komponentenwände gebildet, wobei die Komponentenwände zwei seitliche Felgenflanken, einen radial inneren (umlaufenden) Felgenboden und ein radial äußeres (umlaufendes) Felgenbett umfassen, welche die Hohlkammer begrenzen. Das bedeutet, dass der Hohlraum als vollständig abgeschlossene Hohlkammer ausgebildet werden kann. Eine Tragstruktur des Komponentenkörpers wird durch wenigstens eine Faserstruktur gebildet. Zur Herstellung der Faserstruktur wird wenigstens ein Faserbündel auf einer (dünnen) Trägerschicht mit Fadenelementen befestigt und auf der Trägerschicht (bzw. dem Trägermaterial) hin und her und insbesondere kreuz und quer geführt, um eine Grundfaserlage bzw. erste Faserlage der Faserstruktur zu bilden. Die Trägerschicht kann eine Unterlage für den Aufbau der Faserstruktur bilden. Die wenigstens eine Faserstruktur wird in einer Werkzeugform drapiert. Es wird wenigstens eine Fülleinheit in der Werkzeugform platziert, sodass die Fülleinheit beim Aushärten oder Verfestigen das Volumen für den Hohlraum freihält und von der Komponentenwand umgeben wird. Regelmäßig wird die Fülleinheit danach aus dem Komponentenkörper entnommen.

Das erfindungsgemäße Verfahren zur Herstellung einer Fahrradfelge hat viele Vorteile. Ein erheblicher Vorteil besteht darin, dass die Tragstruktur durch gezieltes Führen und Befestigen eines Faserbündels auf einer Trägerschicht erstellt wird. Dadurch entsteht die Faserstruktur, die entsprechend den Vorstellungen und Wünschen derart hergestellt wird, dass sie den geforderten Bedingungen standhält.

Insbesondere wird die Faserstruktur maschinell hergestellt. Mittels einer Maschine wird das Faserbündel positioniert und geführt und gezielt auf der Trägerschicht (als Unterlage) abgelegt und befestigt. Die Maschine wird durch eine (integrierte und/oder separate) Steuereinrichtung gesteuert. Dadurch können der manuelle Aufwand und die Handarbeit erheblich reduziert werden. Weiterhin kann durch die gezielte Herstellung von Faserstrukturen der Teileaufwand insgesamt erheblich reduziert werden, sodass nicht mehr eine Vielzahl von 50, 100 oder 200 Einzelteilen (Gewebeabschnitten oder Prepregs) in der Werkzeugform drapiert werden muss, sondern gegebenenfalls eine einstellige Anzahl von Faserstrukturen ausreicht, um die Fahrradkomponente in Form der Fahrradfelge herzustellen. Durch die Verringerung der Anzahl der zu drapierenden Teile kann die Fehlerzahl erheblich reduziert werden.

Es ist möglich, dass die Maschine zwei oder mehr Faserbündel gleichzeitig ablegt und befestigt. Die Positionierung und Befestigung von z.B. zwei Faserbündeln kann gleichzeitig und auch unabhängig voneinander erfolgen.

Die Trägerschicht kann auch als Unterlage bezeichnet werden, auf der das Faserbündel gezielt hin und her und insbesondere kreuz und quer und vorzugsweise sich kreuzend abgelegt und befestigt wird.

Die Trägerschicht ist insbesondere dünn im Vergleich zu einer maximalen Wandstärke des Komponentenkörpers und insbesondere auch dünner als ein Durchmesser des auf der Trägerschicht abgelegten Faserbündels. Das Faserbündel umfasst vorzugsweise wenigstens zwei Einzelfasern und insbesondere eine Vielzahl paralleler Einzelfasern, die ein Faserroving bilden. Möglich ist es, dass das Faserbündel 1000, 10000 oder 30000 oder 50000 und mehr gleicher oder unterschiedlicher Einzelfasern enthält. In einer konkreten Ausgestaltung hat ein rund ausgebildetes Faserbündel mit 36000 Einzelfasern einen Durchmesser von etwa 2 mm (+/- etwa 25%) und in flacher Form eine Breite von z.B. 5 mm und eine sich entsprechend ergebende Höhe.

In bevorzugten Weiterbildungen wird bei der Herstellung wenigstens einer Faserstruktur auf der Grundfaserlage (erste Ebene bzw. erste Faserebene/Faserlage) wenigstens abschnittsweise wenigstens eine weitere Faserlage abgelegt und befestigt. Dadurch wird auf der Grundfaserlage eine weitere flächige Faserlage aufgebracht und befestigt, sodass die Faserstruktur an definierten Abschnitten stärker ausgebildet (Verstärkungsabschnitt) ist als in anderen Bereichen. Dadurch können lokal unterschiedlich und insbesondere stärker wirkende Kräfte gezielt abgeleitet werden bzw. die Tragstruktur so ausgebildet, dass die Art und Richtung einwirkender Kräfte (Stärke, Richtung, Art: Zug, Druck, Klemmung, Schub) passend aufgenommen und abgeleitet werden.

Dabei erstrecken sich die Einzelfasern des Faserbündels vorzugsweise jeweils vollständig und einstückig durch alle Bereiche der Faserstruktur. Wenn die Faserstruktur nur aus einer einzigen Faser aufgebaut würde, würde sich die Faser durch alle Bereiche der Faserstruktur von dem ersten bis zu dem zweiten Ende erstrecken und alles einstückig ausgebildet sein, abgesehen von dem Fadenelement.

Denkbar ist es auch, dass nach dem Ablegen einer ersten Faserlage aus insbesondere einem durchgängigen Faserbündel, das Faserbündel abgeschnitten wird. Der Kopf der Maschine kann dann neu positioniert werden und dasselbe oder ein anderes Faserbündel kann eine zweite Faserlage bilden. Regelmäßig erstreckt sich ein Faserbündel durchgängig durch die ganze Faserstruktur. Das erleichtert die Fertigung.

Vorzugsweise wird das wenigstens eine Faserbündel mit einem Fadenelement auf der Trägerschicht bzw. dem Trägermaterial oder einer Faserlage der Faserstruktur aufgenäht oder aufgestickt. Insbesondere wird die Faserstruktur mit einer Stickmaschine nach dem TFP-Prinzip (Tailored Fiber Placement) hergestellt.

Vorzugsweise besteht das Fadenelement wenigstens teilweise aus einem thermoplastischen Material. Möglich ist auch der Einsatz anderer Materialien für die Fadenelemente. Das Faserbündel umfasst in allen Ausgestaltungen vorzugsweise wenigstens zwei Fasern. Das Faserbündel umfasst besonders bevorzugt Verstärkungsfasern, die zum Beispiel als Carbonfasern oder Glasfasern und/oder Naturfasern oder dergleichen ausgebildet sein können. Das Faserbündel kann auch nur aus Verstärkungsfasern bestehen und keine andere Fasertypen umfassen.

Möglich und bevorzugt ist es auch, dass das Faserbündel Fasern aus Matrixmaterial umfasst. Die Fasern aus Matrixmaterial werden in der Werkzeugform insbesondere aufgeschmolzen, um gemeinsam mit den Verstärkungsfasern wenigstens einen Teil des Komponentenkörpers zu bilden.

Vorzugsweise umfasst die Faserstruktur Endlosfasern. Das bedeutet insbesondere, dass alle Faserlagen und Ebenen aus einem Endlosfaserbündel bestehen oder ein solches umfassen.

In bestimmten bevorzugten Ausgestaltungen wird die Trägerschicht nach dem Herstellen der Faserstruktur entfernt. Dann verbleibt eine Faserstruktur, die nahezu vollständig oder vollständig aus dem Faserbündel und den Fadenelementen besteht, welche einzelne Abschnitte und Elemente und Teile des Faserbündels miteinander verbinden.

Generell dient die Trägerschicht nicht zur Verleihung von Stabilität der Faserstruktur, sondern dient (im Wesentlichen oder nur) als Grundlage zum Aufbringen und Positionieren des Faserbündels.

In bevorzugten Ausgestaltungen ist es möglich, dass die Trägerschicht eine Vliesschicht umfasst oder aus einer solchen besteht. Möglich ist es auch, dass die Trägerschicht eine Folie oder ein Faservlies umfasst oder als eine solche ausgebildet ist. Mit einer Vliesschicht auf der Außenseite des Komponentenkörpers kann beim Aushärten oder Verfestigen des Komponentenkörpers bzw. Felgenkörpers eine hochwertige Oberfläche zur Verfügung gestellt werden.

Insbesondere kann die Trägerschicht auch eine Schicht aus einem thermoplastischen Material umfassen oder daraus bestehen. Insbesondere, wenn als Matrixmaterial ein thermoplastisches Material verwendet wird, ist eine Trägerschicht aus einem thermoplastischen Material vorteilhaft, da diese während des Herstellprozesses direkt zu Matrixmaterial wird. Wenn die Trägerschicht aus dem gleichen oder einem ähnlichen thermoplastischen Material wie das Matrixmaterial besteht, dann wird die Trägerschicht beim Erwärmen aufschmelzen und damit zu Matrixmaterial.

Vorzugsweise werden die Faserstrukturen dreidimensional vorgeformt und mit einem Faserbinder in ihrer dreidimensionalen Form gesichert und dann in die Werkzeugform eingelegt. Als Faserbinder kann beispielsweise ein tropfenförmiges flüssiges thermoplastisches Material eingesetzt werden, welches lokal die Fasern aneinander bindet und so insgesamt genügend Halt gibt, um das zum Beispiel in einer Vorform vorgeformte Fasermaterial bzw. die Faserstrukturen formgerecht in die Herstellform einzulegen. So wird ein besonders hohes Maß an Genauigkeit erreicht. Dadurch kann die Wandstärke gegebenenfalls reduziert werden, da Unsicherheiten beim Herstellerprozess verringert werden und die Stabilität erhöht wird. Ein Faserbinder kann aus unterschiedlichen Materialien bestehen. Möglich ist der Einsatz von z.B. einem thermoplastischen Pulver oder auch ein Pulver auf duroplastischer Basis oder z.B. die Verwendung eines Sprühklebers oder dergleichen mehr.

Durch einen solchen Faserbinder kann auf einfache Art und Weise das zweidimensional (zum Beispiel) gestickte Halbzeug (Faserstruktur) in eine 3-dimensionale Geometrie überführt werden, die zur Überführung in die Werkzeugform zur Herstellung der Fahrradfelge eine ausreichende Stabilität aufweist.

Als Fülleinheit kann ein Folienschlauch (oder Schlauch) verwendet werden, der nach der Positionierung in der Werkzeugform und innerhalb der Faserstruktur aufgeblasen wird, um eine Gegenform zu bilden. Möglich ist es auch, dass als Fülleinheit ein fester Kern verwendet wird, der in die Werkzeugform eingelegt wird. Möglich ist es auch, dass ein (fester) Kern einen Teil einer Fülleinheit bildet. Oder es wird eine Kombination aus (festem) Kern und (aufblasbarem) Folienschlauch eingesetzt. Möglich ist auch ein Wachskern, der mit einem Luftsack ummantelt ist, welcher dann aufgepumpt werden kann.

Ein Folienschlauch als Fülleinheit und/oder ein fester Kern als Fülleinheit kann nach der Herstellung des Komponentenkörpers darin verbleiben. Oder die Fülleinheit wird wieder entfernt. Ein aufblasbarer Folienschlauch ("Bladder") als Fülleinheit ist beim Einlegen regelmäßig nicht mit Druck beaufschlagt. Entsprechend wird das Volumen des Hohlraums erst im Prozess (wenn aufgepumpt) vollumfänglich durch den Füllköper der Fülleinheit ausgefüllt.

In vorteilhaften Ausgestaltungen werden die einzelnen Werkzeugteile der Werkzeugform geschlossen und es wird (ergänzendes) Matrixmaterial injiziert. Als Matrixmaterial kann insbesondere duroplastisches Epoxidharz und/oder ein thermoplastisches Material eingesetzt werden.

Das Fadenelement kann in dem Felgenkörper erhalten bleiben. Möglich ist es auch, dass das Fadenelement bei dem Fertigstellen des Komponentenkörpers bzw. Felgenkörpers wenigstens teilweise aufgeschmolzen wird. Dann ist es möglich, dass das Fadenelement als solches nicht vollständig in dem Komponentenkörper erhalten bleibt. Regelmäßig kann es aber bei mikroskopischen Untersuchungen noch detektiert werden. Als Fadenelemente können auch (dünne) Verstärkungsfasern eingesetzt werden. Die Fadenelemente sind dünner als das Faserbündel.

Eine Fahrradfelge mit einem Felgenkörper als Fahrradkomponente weist einen Felgenkörper auf, der sich in einer Felgenebene über einen Umfang von 360° quer bzw. senkrecht zu seiner Drehachse erstreckt. Die Drehachse ist regelmäßig auch eine Symmetrieachse des Felgenkörpers. Der Hohlraum bildet eine (einzige) insbesondere vollständig umlaufende Hohlkammer in dem Felgenkörper. In dem Komponentenkörper werden mehrere Komponentenwände gebildet, wobei die Komponentenwände zwei seitliche Felgenflanken, einen radial inneren Felgenboden und ein radial äußeres Felgenbett umfassen, welche die Hohlkammer begrenzen.

Eine solche Herstellung einer Fahrradfelge ist besonders vorteilhaft, da damit eine stabile und gleichbleibend hohe Qualität, eine hohe Reproduzierbarkeit und geringere Kosten bei der Fertigung ermöglicht werden.

Vorzugsweise erstreckt sich wenigstens eine Faserstruktur über einen erheblichen Anteil des Umfangs quer bzw. senkrecht zu der Drehachse des Felgenkörpers. Insbesondere erstreckt sich die Faserstruktur über wenigstens ein Viertel oder wenigstens ein Drittel oder wenigstens die Hälfte des Umfangs und kann sich besonders bevorzugt über wenigstens den vollständigen Umfang (des Felgenkörpers in der Felgenebene) erstrecken. Eine Faserstruktur, die beispielsweise wenigstens einen Teil des Felgenbettes oder auch des Felgenbodens bildet, kann sich insbesondere auch über einen Umfangswinkel von mehr als 360° erstrecken. Beispielsweise kann an der Verbundstelle ein gewisser Überlapp vorgesehen sein. Möglich ist es aber auch, dass sich die Faserstruktur dort über einen Winkel von zum Beispiel 720° oder mehr erstreckt. Dann erstreckt sich die Faserstruktur zweimal über den Umfang.

In bevorzugten Ausgestaltungen bildet eine (erste) Faserstruktur (Felgenflankenstruktur) einen wesentlichen Teil einer Felgenflanke. Eine andere (zweite) Faserstruktur bildet vorzugsweise einen wesentlichen Teil der anderen Felgenflanke (Felgenflankenstruktur). Eine weitere (dritte) Faserstruktur (Felgenbettstruktur) bildet vorzugsweise einen wesentlichen Teil des Felgenbettes. Dabei können sich diese drei Faserstrukturen jeweils vollumfänglich um die Drehachse des Felgenkörpers herum erstrecken. Auch wenn sich eine Faserstruktur vollumfänglich über den Umfang des Felgenkörpers erstreckt, kann eine Felgenflanke aus zwei oder mehr Faserstrukturen bestehen bzw. zusammensetzen. Das ist zum Beispiel der Fall, wenn im Bereich der Felgenhörner eine weitere Faserstruktur aufgebracht wird.

Vorzugsweise werden radial außen Felgenhörner ausgebildet. Insbesondere wird ein Felgenhorn durch die die Felgenflanke bildende Faserstruktur (Felgenflankenstruktur) und die weitere Faserstruktur (Felgenbettstruktur) gebildet, wobei die die Felgenflanke bildende Faserstruktur (Felgenflankenstruktur) am radial äußeren Ende die weitere Faserstruktur (Felgenbettstruktur) radial nach außen abdeckt und/oder umgibt.

In einfachen Ausgestaltungen bedeutet das, dass ein Felgenhorn durch die Felgenflankenstruktur und die Felgenbettstruktur gebildet wird, wobei die Felgenflankenstruktur am radial äußeren Ende die Felgenbettstruktur radial nach außen abdeckt und/oder umgibt. Dabei können zwei Felgenflankenstrukturen vorgesehen, nämlich für jede Felgenflanke eine. Oder es wird eine Felgenflankenstruktur eingesetzt, die sich über beide Felgenflanken erstreckt. Mit dem Wort bzw. Wortbestandteil "Struktur" wird hier eine Faserstruktur gemeint. Insbesondere wird das radial äußere Ende der Felgenflankenstruktur umgeklappt und erstreckt sich dann über wenigstens 1/5 oder 1/4 oder vorzugsweise 1/3 oder 1/2 oder einen noch größeren Anteil einer radialen Höhe des Felgenhorns wieder radial zurück nach innen. Dadurch wird das radial äußere Ende der Felgenbettstruktur geschützt von der Felgenflankenstruktur aufgenommen. Außerdem liegen auch die freien Enden der Felgenflankenstruktur geschützt aufgenommen und sind Stößen auf das Felgenhorn nicht direkt ausgesetzt

Besonders bevorzugt wird in dem Bereich der Felgenhörner an der Werkzeugform ein elastischer Überzug und insbesondere ein Ringüberzug eingesetzt. Dabei besteht die Werkzeugform aus einem weniger elastischen Material und der Überzug aus stärker elastischen (elastischeren) Material. Das bedeutet, dass der Überzug bei dem Aushärten Druck ausüben und nachgeben kann. Eine ideale Materialmenge ist bei der Herstellung einer Fahrradfelge nicht immer exakt vorhanden. Der Überzug erlaubt einen Ausgleich. Bei (etwas) zu viel Material wird der Druck auf die Wandung des Felgenhorns vergrößert und das elastischere Material des Überzugs (Ringüberzugs) stärker komprimiert und bei (etwas) weniger Faserverbundmaterial wird der Druck (etwas) verringert und das elastischere Material des Überzugs weniger stark komprimiert. In beiden Fällen kann bei bestimmten Abweichungen noch ausreichend Druck aufgebracht werden, sodass eine Felge mit hoher und verbesserter Qualität herstellbar ist.

In bevorzugten Weiterbildungen sind die die Felgenflanken bildenden Faserstrukturen jeweils kreisringförmig ausgebildet. Die Faserstrukturen für die beiden Felgenflanken können identisch ausgebildet sein. Möglich ist es aber auch, dass die die Felgenflanken bildenden Faserstrukturen jeweils den gleichen Außendurchmesser und unterschiedliche Innendurchmesser aufweisen. Das ist zum Beispiel dann möglich, wenn sich die Faserstrukturen der Felgenflanken im Bereich des Felgenbodens überlappen.

Eine Faserstruktur, die einen Teil des Felgenbetts bildet, kann insbesondere als Streifen ausgebildet sein. Möglich ist es auch, dass diese Faserstruktur trogförmig oder rinnenförmig ausgebildet wird. In allen Fällen kann die das Felgenbett bildende oder dazu beitragende Faserstruktur trogförmig aufgebracht werden, auch wenn die Faserstruktur an sich streifenförmig hergestellt wurde.

In vorteilhaften Ausgestaltungen ist es möglich, dass eine zusätzliche, separate oder weitere Faserstruktur auf den Felgenboden aufgebracht wird. Das ist sowohl auf der Außenseite als auch auf der Innenseite möglich. Wird die Faserstruktur auf der Außenseite aufgebracht, so wird diese zunächst in die Werkzeugform eingelegt. Soll die Faserstruktur den Felgenboden von innen verstärken, werden zunächst die Faserstrukturen eingelegt, die die Felgenflanken bilden sollen. Danach wird dann die zusätzliche Faserstruktur zur Verstärkung des Felgenbodens eingelegt.

In allen Ausgestaltungen ist es bevorzugt, dass der Felgenkörper einer Fahrradfelge wenigstens teilweise aus einem Faserverbundwerkstoff besteht, wobei die Fasern des Faserverbundwerkstoffs auf eine Grundlage bzw. eine Trägerschicht aufgestickt werden.

In allen Ausgestaltungen und Weiterbildungen der Erfindung bildet eine (erste) Faserstruktur wenigstens eine Felgenflanke aus. In der Felgenflanke können auch Bestandteile der (ersten) Faserstruktur vorhanden sein. Vorzugsweise bildet die (erste) Faserstruktur auch (nahezu vollständig den sichtbaren Teil der Felgenflanke aus. Die (erste) Faserstruktur kann auch (erste) Felgenflankenstruktur oder (erste) Felgenflankenfaserstruktur genannt werden. Die (erste) Felgenflankenstruktur kann auch beide Felgenflanken ausbilden bzw. dazu beitragen. Möglich ist es auch, dass eine andere (zweite) Faserstruktur die andere Felgenflanke ausbildet. Diese andere (zweite) Faserstruktur kann dann andere (oder zweite) Felgenflankenstruktur oder andere (zweite) Felgenflankenfaserstruktur genannt werden.

In allen Ausgestaltungen und Weiterbildungen der Erfindung bildet vorzugsweise eine weitere (dritte) Faserstruktur wenigstens das Felgenbett aus. Diese weitere (dritte) Faserstruktur kann auch als Felgenbettstruktur oder Felgenbettfaserstruktur bezeichnet werden. In allen Ausgestaltungen und Weiterbildungen der Erfindung unterstützt vorzugsweise eine andere (vierte) Faserstruktur die Bildung des Felgenbodens. Diese andere (vierte) Faserstruktur kann auch als Felgenbodenstruktur oder Felgenbodenfaserstruktur oder als Felgenbodenteilstruktur bezeichnet werden. Das kann Felgenbodenteilstruktur genannt werden, weil diese (vierte) Faserstruktur regelmäßig nur zur Verstärkung dient. Auf diese Felgenbodenteilstruktur kann auch verzichtet werden.

In einer konkreten Ausgestaltung dient das Verfahren zur Herstellung einer Fahrradfelge mit einem Felgenkörper mit einer darin integrierten Hohlkammer, die von zwei seitlichen Felgenflanken, einem radial inneren Felgenboden und einem radial äußeren Felgenbett begrenzt wird. Eine Tragstruktur des Felgenkörpers wird durch wenigstens eine Faserstruktur gebildet. Es wird zunächst wenigstens eine Faserstruktur hergestellt, wobei zur Herstellung der Faserstruktur ein Faserbündel mit einer Vielzahl paralleler Einzelfasern (insbesondere ein Faserroving) auf einer (dünnen) Trägerschicht (Unterlage) mit Fadenelementen befestigt wird. Das Faserbündel wird insbesondere maschinell und automatisch auf der Trägerschicht bzw. Unterlage hin und her und insbesondere kreuz und quer geführt und abgelegt und befestigt, um eine erste Ebene bzw. Grundfaserlage der Faserstruktur zu bilden. Mit dem Faserbündel wird auf der ersten Ebene bzw. Grundfaserlage wenigstens abschnittsweise wenigstens eine zweite Faserebene bzw. zweite Faserlage abgelegt und befestigt, um auf der Trägerschicht (Unterlage) eine flächige (und insgesamt dreidimensionale) Faserstruktur aufzubringen, welche an definierten Abschnitten stärker ausgebildet ist als in anderen Bereichen. Wenigstens eine Faserstruktur wird in einer Werkzeugform drapiert. Die Faserstruktur erstreckt sich über einen erheblichen Anteil eines Umfangwinkels einer Felgenflanke und insbesondere über wenigstens 90° des Umfangs.

Damit wird eine einfache, zuverlässige und kostengünstige Herstellung einer Fahrradkomponente und insbesondere eine Fahrradfelge ermöglicht.

Eine erfindungsgemäße Fahrradfelge umfasst einen Komponentenkörper als Felgenkörper mit wenigstens einem darin integrierten Hohlraum als Hohlkammer, wobei der Hohlraum ringsum von wenigstens einer umgebenden Komponentenwand umschlossen wird und wobei eine Tragstruktur des Komponentenkörpers durch wenigstens eine Faserstruktur gebildet wird, wobei die Faserstruktur ein Faserbündel umfasst, welches innerhalb der Faserstruktur hin und her verläuft und aneinander mit Fadenelementen befestigt ist.

Dabei ist der Komponentenkörper als Felgenkörper ausgebildet und weist zwei seitliche Felgenflanken, einen Felgenboden und ein Felgenbett und eine Hohlkammer zwischen den Felgenflanken, dem Felgenboden und dem Felgenbett auf. Der Felgenkörper besteht wenigstens teilweise aus einem Faserverbundwerkstoff, wobei die Fasern des Faserverbundwerkstoffs auf eine Trägerschicht oder aufeinander aufgenäht oder aufgestickt sind.

Insgesamt ermöglicht die Erfindung eine kostengünstige Produktion und somit bessere Konkurrenzfähigkeit. Es können Fahrradfelgen mit einer stabilen und gleichbleibend hohen Qualität auch bei günstigeren Preisen hergestellt und angeboten werden. Die Reproduzierbarkeit ist höher und es kann Abfall reduziert werden. Es ist möglich, die Handarbeit und somit den Personalbedarf zu reduzieren. Gleichzeitig können Fehler beim Auflegen von einzelnen Gewebestücken vermieden werden, da die Anzahl der aufzulegenden Teile drastisch reduziert werden kann. Es müssen nicht 100 Gewebestücke oder dergleichen aufgelegt werden, sondern bei der Herstellung einer Fahrradfelge kann es ausreichen, 3, 4, 5 oder vielleicht 10 einzelne Faserstrukturen in der Werkzeugform zu drapieren.

Weiterhin können die Wiederverwendung und das Recycling verbessert werden. Es können unterschiedliche Ausgangsmaterialien verwendet werden, um den entsprechenden produktspezifischen Ansprüchen gerecht zu werden. Auch die Schlagfestigkeit kann verbessert werden.

Die Erfindung ermöglicht eine Teilautomatisierung oder Automatisierung bei der Herstellung.

Durch das Ablegen von Faserbündeln und das Befestigen über Fadenelemente können fertige, flächige Halbzeuge bzw. Preformen erstellt werden, die als Faserstrukturen später zusammengesetzt werden und eine Fahrradfelge ergeben. Insbesondere werden Trockenfasern in dem Faserbündel verwendet.

Zur Herstellung einer Fahrradfelge werden insbesondere zwei Werkzeughälften und eine Ringeinrichtung zur Ausbildung des Felgenbetts verwendet. Die Faserstrukturen können durch Überlappungen miteinander verbunden werden. Idealerweise werden die Faserstrukturen bereits dreidimensional hergestellt oder vorgeformt. Dann kann das Einlegen schnell und prozesssicher erfolgen.

Zur Füllung des Hohlraums kann ein Folienschlauch und/oder ein fester Kern als Fülleinheit eingesetzt werden.

Die entsprechend bestückte Werkzeugform kann anschließend mittels RTM oder mittels eines Infusionsprozesses mit thermoplastischem Matrixmaterial oder mit einem duroplastischen Epoxidharz gefüllt werden. Das Gemisch aus Fasern und Matrix wird verfestigt und zum Beispiel ausgehärtet. Bei Verwendung von thermoplastischem Matrixmaterial kann das Material entsprechend nachträglich erwärmt werden, um es zu verflüssigen und dann wieder zu verfestigen.

Die Trägerschicht kann aus einer Folie, einem Faservlies oder dergleichen gefertigt werden. Die Trägerschicht kann nach dem Herstellen der Faserstrukturen entfernt werden oder verbleibt als mögliche Sichtfläche oder als Verstärkungsmaterial in der Fahrradkomponente.

Bei Verwendung von Faservliesen kann die Flusseigenschaft von einem (zum Beispiel) injizierten duroplastischen Expoxidharz verbessert werden. Es kann eine hochqualitative Oberfläche erzielt werden. Die Oberfläche der Fahrradfelge kann die geforderten hochqualitativen technischen und optischen Eigenschaften erfüllen, sodass eine Nacharbeit nicht nötig ist. Dadurch wird die Wirtschaftlichkeit des Verfahren und des Produkts verbessert.

In allen Ausgestaltungen ist möglich, dass das Faserbündel Hybrid-Fasern umfasst, wobei einige Fasern aus einem Matrixmaterial und andere Fasern aus einem Verstärkungsmaterial bestehen. Beispielsweise können Einzelfasern aus thermoplastischem Kunststoff und Carbonfasern in dem Faserbündel enthalten werden enthalten. Dann kann das benötigte Matrixmaterial zum Teil oder vollständig schon in dem Faserbündel enthalten sein. Das Werkzeug kann dann entsprechend erhitzt und die thermoplastischen Fasern verschmolzen werden, sodass eine Faserverbundkomponente entsteht.

Möglich ist es auch, dass unterschiedliche Rohfasern miteinander kombiniert werden, so können verschiedene Carbonfasern mit verschiedenen mechanischen Eigenschaften in einer Faserstruktur abgelegt werden. Dann kann die ideale Faser in jedem Bereich je nach Beanspruchung oder Anforderung an das Produkt verwendet werden. Es ist auch möglich, Naturfasern zu verwenden oder Carbonfasern und andere Fasern, wie z.B. Naturfasern, zu einem Fasergemisch kombinieren.

Es können gezielt hochbelastete Stellen einer Fahrradkomponente in Kraftflussrichtung verstärkt werden, in dem eine entsprechende Faserstruktur verwendet wird.

Es ist auch möglich, spezielle Belastungen durch gezieltes Faserablegen abzufangen bzw. den Komponentenkörper gezielt entsprechend zu verstärken. Z.B. können ringförmige oder sternförmige Verstärkungen um ein Speichenloch oder ein Ventilloch eingebracht werden. Lokale Verstärkungen an Fahrradfelgen eines Speichenlochs können bis in die Seitenwand (Felgenflanke) und den Hornbereich (Felgenhorn) gehen.

Möglich ist es auch, direkt Löcher mit auszubilden, z.B. für ein Speichenloch oder ein Ventilloch oder Nippellöcher. Dann müssen diese nicht mehr gebohrt werden. Dabei können lokale Verstärkungen um das jeweilige Loch eingearbeitet werden.

Es ist mit der Erfindung auch möglich, andere Fahrradkomponenten herzustellen, wie zum Beispiel ein Cockpit mit einem Lenker. Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Mountainbikes mit erfindungsgemäßen Fahrradfelgen;
- Figur 2: eine schematische Darstellung eines Rennrades mit erfindungsgemäßen Fahrradfelgen;
- Figuren 3a-3d: schematische Schnitte durch eine Werkzeugform bei der Herstellung von Fahrradfelgen;
- Figuren 4a-5d: schematische perspektivische Darstellungen von Faserstrukturen bei der Herstellung von Fahrradfelgen;
- Figur 5: eine Maschine zur Herstellung einer Faserstruktur für die erfindungsgemäßen Fahrradfelgen; und
- Figuren 6a-6d: Faserstrukturen hergestellt mit der Maschine nach Figur 5.

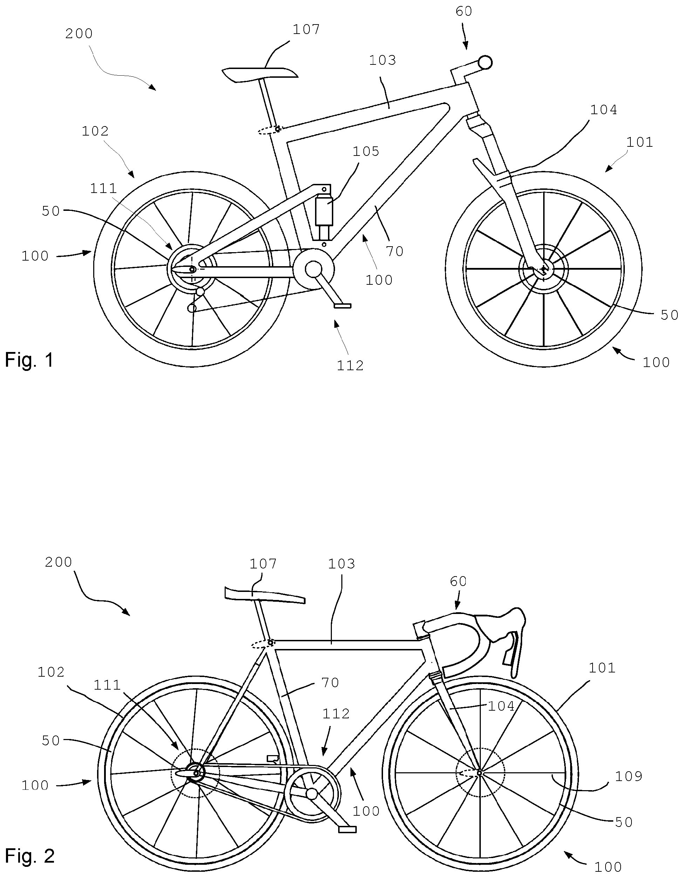

In den Figuren 1 und 2 sind Fahrräder 200 dargestellt, die jeweils über zwei erfindungsgemäße Fahrradfelgen50 verfügen. Das Mountainbike bzw. Rennrad bzw. Gravel-Rad 200 verfügt jeweils über einen Lenker 60, ein Vorderrad 101 und ein Hinterrad 102, die jeweils über erfindungsgemäße Fahrradfelgen 50 verfügen. An dem Hinterrad 102 ist eine Ritzeleinrichtung 111 vorhanden. Die beiden Räder 101, 102 verfügen jeweils über Speichen 109. Es können konventionelle Felgenbremsen oder auch andere Bremsen wie zum Beispiel Scheibenbremsen vorgesehen sein.

Ein Fahrrad 200 verfügt über einen Rahmen 103, der Rahmenkomponenten 70 umfasst. Das Fahrrad 200 verfügt über einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein.

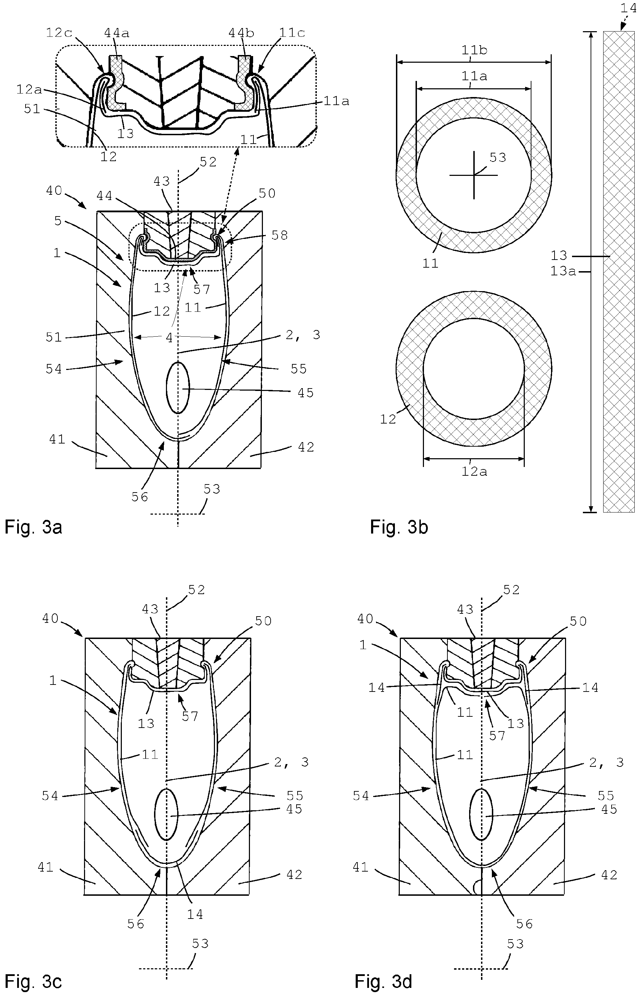

In den Figuren 3a bis 3d sind verschiedene Fahrradfelgen 50 als Fahrradkomponenten 100 bei der Herstellung in einer Werkzeugform 40 zu erkennen. Die Fahrradfelgen 50 weisen jeweils einen einstückigen Felgenkörper 1 auf.

Figur 3a zeigt einen einfachen und sehr vorteilhaften Aufbau, bei dem für die Werkzeugform 40 zwei Werkzeughälften 41 und 42 verwendet werden, die zur Ausformung der Felgenflanken 54, 55, des Felgenbodens 56 und der Felgenhörner 58 dienen. Zur Ausformung des Felgenbettes 57 können Werkzeugteile 43 eingesetzt werden.

Fig. 3a zeigt einen Überzug 44 aus einem elastischerem Material, der an den Felgenhörner 58 und dem Felgenbett 57 anliegt. Der Überzug 44 besteht z.B. aus Silikon und wird in das Werkzeug eingelegt. Der Überzug 44 erlaubt eine bessere Fertigung der Felgenhörner 58. Bei der Fertigung wird Wert daraufgelegt, dass die äußeren Faserstrukturen 11, 12 die Faserstruktur 13 am radial äußeren Ende an den Felgenhörner 58 abdeckt oder sogar umgibt. Insbesondere wird das Ende 11a, 12a der jeweiligen Faserstruktur 11, 12 umgeklappt und erstreckt sich über 1/4 oder besser 1/3 oder 1/2 oder einen noch größeren Anteil einer radialen Höhe des Felgenhorns wieder radial zurück nach innen. Dadurch wird das radial äußere Ende der Faserstruktur 13 geschützt aufgenommen. Außerdem liegen auch die freien Enden 11a, 12a geschützt aufgenommen und sich Stößen auf das Felgenhorn nicht direkt ausgesetzt. Dadurch ergibt sich ein signifikant besserer Schutz der Felge auch bei starken Stößen oder hohen Belastungen.

Die Betriebsfestigkeit wird dadurch positiv beeinflusst, wenn die Faserstrukturen 11 und 12 die Faserstruktur 13 am radial äußeren Ende (im Horn) umgibt/länger ist und um die Faserlage 13 umgelegt wird. Auch das Ausfallverhalten (Schadensbild bei Impact) wird so positiv beeinflusst. Die Fahrradfelge ist sicherer. Das gilt für alle Arten von Felgen. Damit die Felgenhörner optimal gefertigt und komprimiert werden, ist der Einsatz eines elastischeren Überzugs in Form z.B. eines Silikonrings sehr vorteilhaft.

In Figur 3a (oben) ist eine Variante gezeigt, bei der sich die Enden 11a, 12a fast über die gesamte Höhe des Felgenhorns zurückerstrecken. In Figur 3a (unten) ist eine Variante dargestellt, bei der sich die Faserstrukturen 11, 12 nur über einen Teil der Höhe wieder radial nach innen erstrecken. In beiden Varianten werden die Enden der Faserstrukturen geschützt aufgenommen.

Vorzugsweise bilden die Faserstrukturen 11, 12 die Sichtlagen der Felgenflanken aus.

In Figur 3a ist oben noch eine Variante vergrößert abgebildet, die zwei separate Ringüberzüge 44a, 44b insbesondere in Form von Silikonringen aufweist, um die Felgenhörner 58 optimal zu gestalten und zu komprimieren.

Es ist aber auch möglich, dass auf den Einsatz von Silikonringen oder anderen Überzügen 44 oder derartigen Einsätzen verzichtet wird, wie es in Figuren 3c und 3d dargestellt ist, wo ein Überzug 44 nicht eingezeichnet ist. Vorzugsweise wird ein Überzug 44 (oder zwei 44a, 44b) verwendet. Entsprechend dann auch in Figuren 3c und 3d.

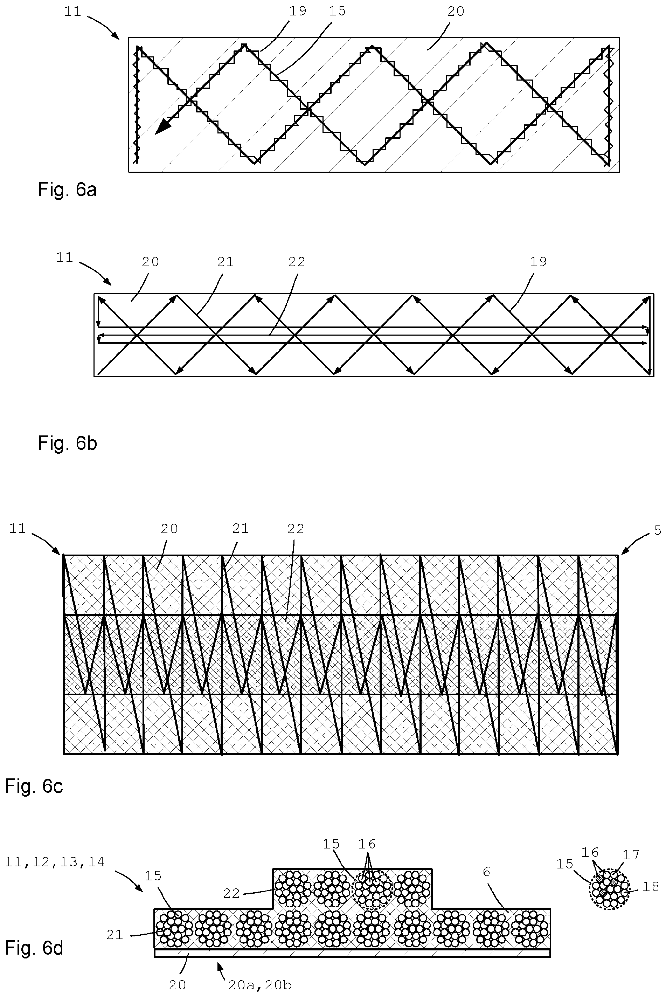

In einer besonders einfachen und vorteilhaften Ausführungsform werden, wie in Figur 3b dargestellt, nur drei einzelne separate Faserstrukturen 11, 12 und 13 eingesetzt, um die Fahrradfelge 50 herzustellen. Dabei werden die Faserstrukturen 11, 12 und 14 in angepasster Weise entsprechend der Verfahrensweise nach den Figuren 6a, 6b, 6c und 6d hergestellt. Die fertigen Faserstrukturen 11, 12 und 13 werden in die Werkzeugform 40 eingelegt, bevor diese verschlossen wird. Dabei bildet die Faserstruktur 11 hier die rechte Felgenflanke 55, während die Faserstruktur 12 die linke Felgenflanke 54 bildet. Grundsätzlich ist auch eine umgekehrte Ausgestaltung möglich, bei der die Faserstruktur 12 die rechte Felgenflanke 55 und die Faserstruktur 11 die linke Felgenflanke 54 bildet.

Die Faserstrukturen 11 und 12 sind hier jeweils kreisringförmig ausgebildet und weisen jeweils den gleichen Außendurchmesser 11b auf. Dieser Außendurchmesser 11b wird durch den Durchmesser der Felgenhörner 58 bestimmt. Der Innendurchmesser 11a, 12a der beiden Faserstrukturen 11, 12 unterscheidet sich hier, da die Faserstruktur 12 sich radial innen nicht nur bis zur mittigen Felgenebene 52 erstreckt, sondern darüber hinaus einen Überlapp bildet und die andere Felgenflanke und Faserstruktur 11 überlappt, um den Felgenboden 56 zu verstärken.

In Figur 3c ist ein Querschnitt zu sehen, wobei zu erkennen ist, dass die Faserstruktur 13 das Felgenbett 57 vollständig und Teile der Felgenhörner 58 ausgebildet.

Die zentrale Felgenebene 52 ist eingezeichnet. Ebenso die Drehachse 53, die eine Symmetrieachse der Felge bildet. Um die Drehachse 53 dreht sich die Felge im vorgesehenen normalen Betrieb. Die Drehachse 53 ist eine Symmetrieachse der Felge, um die sich diese rotationssymmetrisch erstreckt.

Im Inneren der Fahrradfelge 50 ist ein Hohlraum 2 zu erkennen, der hier eine Hohlkammer 3 bildet. Bei der Herstellung der Felge wird zum Beispiel ein Schlauch oder ein Kern als Fülleinheit 45 im Inneren der Werkzeugform 40 platziert, um den herzustellenden Hohlraum 2 auszufüllen.

Der Hohlraum 2 ist von den Komponentenwänden 4, nämlich den Felgenflanken 54, 55 dem Felgenboden 56 und dem Felgenbett 57 umgeben.

Bei dem Ausführungsbeispiel nach Figur 3a wurden drei Faserstrukturen 11, 12 und 13 zur Herstellung eingesetzt. Bei dem Ausführungsbeispiel nach Figur 3c wird eine vierte Faserstruktur 14 eingesetzt, die zur Ausbildung und Verstärkung des Felgenbodens 56 dient. Dann ist es nicht unbedingt erforderlich, dass sich die Faserstrukturen 11, 12 bis radial nach innen zum Felgenboden 56 hin erstrecken. Auch in diesem Ausführungsbeispiel werden nur sehr wenige Faserstrukturen verwendet, da sich die Faserstrukturen insbesondere vollständig über den Umfang um die Drehachse 53 herum erstrecken.

In Figur 3d ist ein weiteres Ausführungsbeispiel abgebildet, wobei hier beispielsweise eine Faserstruktur 11 eingesetzt wird, die die Felgenflanken und den Felgenboden ausbildet. Weiterhin trägt die Faserstruktur 11 auch zur Stabilität des Felgenbetts 57 bei. Eine Faserstruktur 13 trägt ebenfalls zur Ausbildung des Felgenbetts 57 bei. Seitlich sind hier noch zwei Faserstrukturen 14 zur Verstärkung der Felgenhörner 58 eingezeichnet. Insgesamt können hier vier Faserstrukturen zur Herstellung der gesamten Fahrradfelge 50 ausreichen. Die Prozesssicherheit wird durch die (sehr stark) reduzierte Anzahl an (manuell) in die Werkzeugform einzulegenden Faserstücken erheblich erhöht.

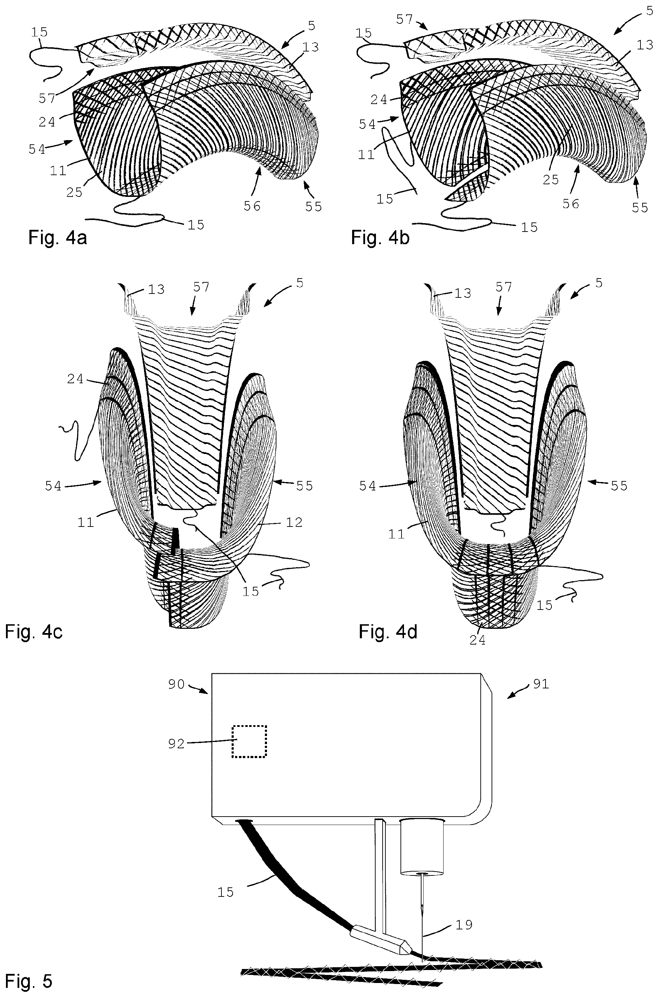

Mit Bezug auf die Figuren 4a bis 4d werden anschaulich perspektivische Darstellungen der eingesetzten Faserstrukturen 11 bis 14 bei der Herstellung unterschiedlicher Fahrradfelgen 50 als Fahrradkomponenten 100 abgebildet. In Figur 4a werden nur zwei unterschiedliche Faserstrukturen 11 und 13 verwendet, wobei die Faserstruktur 11 zur Ausbildung der Felgenflanken 54, 55 des Felgenbodens 56 beiträgt. Die Faserstruktur 13 trägt zur Verstärkung der Felgenhörner und zur Ausbildung des Felgenbetts 57 bei. Erkennbar ist, dass einzelne definierte Abschnitte 24 als Verstärkungsabschnitte dienen, wo eine zusätzliche Faserlage auf die Grundfaserlage oder jedenfalls eine untere Faserlage aufgebracht wurde. Durch die gezielte Aufbringung des Faserbündels 15 bzw. der Faserbündel 15 und die gezielte dreidimensionale Struktur der Faserstrukturen 11 bis 14 kann jeweils lokal gezielt eine entsprechende Verstärkung des Komponentenkörpers 1 erfolgen.

Grundsätzlich erstreckt sich dabei ein Faserbündel 15 vollständig durch eine jeweilige Faserstruktur 11, 12, 13 oder 14.

Figur 4b zeigt eine Variante, bei der separate Faserstrukturen 11, 12 für die beiden Felgenflanken verwendet werden. Eine zusätzliche Faserstruktur 13 dient zur Ausbildung des Felgenbetts 57.

Figur 4c zeigt eine Variante bei der zwei Faserstrukturen 11 und 12 zur Ausbildung der Felgenflanken 54 und 55 vorgesehen sind, während eine Faserstruktur 13 zur Verstärkung und Ausbildung des Felgenbetts 57 dient. In den seitlichen Bereichen und auch im radial inneren Bereich sind hier Verstärkungsabschnitte 24 (definierte Abschnitte) zu erkennen, während auch Bereiche 25 vorliegen, die eine geringere Anzahl von Faserlagen aufweisen als in den Verstärkungsabschnitten 24.

Figur 4d zeigt schließlich einer Variante einer Fahrradfelge 50, bei der die Tragstruktur 5 durch eine Faserstruktur 11 und eine Faserstruktur 13 gebildet wird. Die Faserstruktur 11 stellt die beiden Felgenflanken 54 und 55 und dem Felgenboden 56 zur Verfügung, während die Faserstruktur 13 das Felgenbett 57 ausbildet und zur Stabilität der Felgenhörner 58 beiträgt. Bestimmte definierte Abschnitte 24 weisen wenigstens eine weitere Faserlage 22 auf, während andere Bereiche 25 nicht verstärkt sind.

Figur 5 zeigt eine schematische Ansicht einer Maschine 90 zur Vorfertigung von Faserstrukturen 11 bis 14 (vergleiche Figuren 4a bis 4d), wobei ein Faserbündel 15 insbesondere von einer Rolle abgerollt und zugeführt wird. Die Maschine 90 verfügt über dreidimensional (in x-, y- und z-Richtung) verfahrbaren Maschinenkopf 91 und wird über eine integrierte und/oder externe Steuerung 92 gesteuert. Das Faserbündel 15 wird gezielt auf einer in Figur 3 nicht sichtbaren Trägerschicht 20 (vergleiche Figur 4a) positioniert und abgelegt und mittels eines Fadenelements 19 dort befestigt.

In einfachen Fällen kann das Faserbündel 15 durch Nähen und/oder Sticken auf der Trägerschicht 20 befestigt werden. Dabei kann ein einziges Fadenelement 19 eingesetzt werden oder es wird ein Oberfaden und ein Unterfaden als Fadenelement 19 eingesetzt.

Die Figuren 6a bis 6d zeigen Ansichten unterschiedlicher Faserstrukturen 11 bis 14, die das Prinzip verdeutlichen.

Bei der insbesondere computertechnisch gesteuerten Steuerung der Maschine 90 wird der Kopf der Maschine so positioniert, dass das Faserbündel 19 gezielt auf der Trägerschicht 20 positioniert und bewegt wird.

Das austretende Faserbündel 15 wird mit dem Fadenelement 19 bzw. den Fadenelementen 19 gezielt auf der Trägerschicht 20 befestigt, wobei das Faserbündel 15 hin und her und insbesondere kreuz und quer über die Trägerschicht 20 bewegt wird. Dabei wird das Faserbündel 15 an der Trägerschicht 20 befestigt. Das Faserbündel 20 wird aber auch an den sich kreuzenden Stellen an sich selbst befestigt.

Insgesamt wird vorzugsweise nahezu die gesamte (vorgesehene Fläche der) Trägerschicht 20 mit dem Faserbündel 15 bedeckt, sodass sich eine erste Faserlage oder Grundfaserlage 21 ergibt, wie Figur 6b zeigt. Darauf wird gezielt eine weitere Faserlage 22 abgelegt, wobei sich regelmäßig die Einzelfasern 16 (vergleiche Figur 4d) einstückig und vollständig durch die Grundfaserlage 21 und die weitere Faserlage 22 erstrecken.

Möglich ist es aber auch, dass nach dem Ablegen der Grundfaserlage 21 ein separates oder anderes Faserbündel 15 verwendet wird, um eine weitere Faserlage 22 auf der Grundfaserlage 21 abzulegen und zu befestigen.

Dabei ist es möglich, dass die weitere Faserlage 22 mit den Fadenelementen 19 unmittelbar und nur auf der ersten bzw. Grundfaserlage 21 befestigt wird. Möglich ist es aber auch, dass die zweite Faserlage 22 (auch) auf bzw. an der Trägerschicht 20 befestigt wird.

In allen Ausgestaltungen und Ausführungen ist die Trägerschicht 20 vorzugsweise dünner als ein (minimaler) Durchmesser eines Faserbündels 15. Insbesondere ist eine Dicke der Trägerschicht 20 kleiner als ein Viertel oder sogar 1/10 eines (maximalen) Durchmessers eines Faserbündels 15. Ein Faserbündel 15 kann in allen Ausgestaltungen kreisrund, oval oder eckig, quadratisch, eher flach oder viereckig mit z.B. abgerundeten Ecken ausgebildet sein.

Figur 6c zeigt eine etwas komplexere Faserstruktur 11, bei der zwei oder auch drei Faserlagen auf dem Trägermaterial bzw. der Trägerschicht 20 abgelegt und befestigt werden. Insgesamt bildet die Faserstruktur 11 hier eine Tragstruktur 5 für die Fahrradkomponente 100.

Figur 6d zeigt einen schematischen Querschnitt durch eine Tragstruktur 5 bzw. eine Faserstruktur 11, 12, 13, 14, wobei hier die dünne Trägerschicht 20 aus einer Vliesschicht 20a und/oder einer Folie 20b mit der darauf abgelegten Grundfaserlage 21 und der darauf positionierten weiteren Faserlage 22 im Querschnitt zu sehen sind. Rein schematisch sind die Faserbündel 15 mit den darin enthaltenen Einzelfasern 16 zu erkennen. Die Einzelfasern 16 können jeweils als Verstärkungsfaser 17 und/oder als Matrixfaser 18 ausgebildet sein. Matrixfasern 18 sind insbesondere dann integriert, wenn die Fahrradkomponente 101 thermoplastisches Matrixmaterial verwendet. Dann kann wenigstens ein Teil des benötigten Matrixmaterials durch das Faserbündel 15 bereitgestellt werden.

Fig. 6d zeigt einen stark schematischen Querschnitt durch ein fertiges Produkt, um das Prinzip zu zeigen. Dann können einzelne thermoplastische Matrixfasern 18 und thermoplastische Fadenelemente 19 aufgelöst sein und sind in dem Matrixmaterial 6 enthalten und gegebenenfalls nicht mehr einfach oder gar nicht mit dem bloßen Auge im Schnitt erkennbar.

Insgesamt wird eine vorteilhafte Fahrradfelge 50 hergestellt, die einen einstückigen Felgenkörper 1 mit einer Hohlkammer 3 umfasst, wobei nur eine geringe Anzahl (<15 und insbesondere kleiner 9) Faserstrukturen eingesetzt wird, um eine leichte und stabile Fahrradfelge zuverlässig herzustellen.

**Bezugszeichenliste:**

| | | | |
|---|---|---|---|
| 1 | Felgenkörper | 45 | Fülleinheit, Kern, Schlauch |
| 2 | Hohlraum | | |
| 3 | Hohlkammer | 50 | Fahrradfelge |
| 4 | Komponentenwand | 52 | Felgenebene |
| 5 | Tragstruktur | 53 | Drehachse |
| 6 | Matrixmaterial | 54,55 | Felgenflanke (11, 12) |
| 11 | Faserstruktur, Felgenflankenstruktur | 56 | Felgenboden (z.B. 14) |
| | | 57 | Felgenbett (13) |
| 11a | Innendurchmesser | 58 | Felgenhorn |
| 11b | Außendurchmesser | 60 | Lenker |
| 12 | Faserstruktur, Felgenflankenstruktur | 70 | Rahmenbauteil |
| | | 90 | Maschine |
| 12a | Innendurchmesser | 91 | Maschinenkopf |
| 12b | Ende | 92 | Steuerung |
| 13 | Faserstruktur, Felgenbettstruktur | 100 | Fahrradkomponente |
| | | 101 | Rad, Vorderrad |
| 13a | Länge | 102 | Rad, Hinterrad |
| 14 | Faserstruktur, Felgenbodenstruktur | 103 | Rahmen |
| | | 104 | Gabel, Federgabel |
| 15 | Faserbündel, Faserroving | 105 | Hinterraddämpfer |
| 16 | Einzelfasern | 107 | Sattel |
| 17 | Verstärkungsfaser | 109 | Speiche |
| 18 | Matrixfaser | 111 | Ritzeleinrichtung |
| 19 | Fadenelement, Faden | 112 | Tretkurbel |
| 20 | Trägerschicht, Trägermaterial, (Unterlage) | 200 | Fahrrad |
| 20a | Vliesschicht | | |
| 20b | Folie | | |
| 21 | Grundfaserlage | | |
| 22 | weitere Faserlage | | |
| 24 | definierter Abschnitt, Verstärkungsabschnitt | | |
| 25 | Bereich (nicht verstärkt) | | |
| 40 | Werkzeugform | | |
| 41 | Werkzeugteil | | |
| 42 | Werkzeugteil | | |
| 43 | Werkzeugteil | | |
| 44 | Überzug | | |
| 44a | Ringüberzug | | |

## Patentansprüche

1. Verfahren zur Herstellung einer Fahrradfelge (50) mit einem Felgenkörper (1) mit wenigstens einem darin integrierten Hohlraum (2), wobei sich der Felgenkörper (1) in einer Felgenebene (52) über einen Umfang von 360° quer zu seiner Drehachse (53) erstreckt,
und wobei der Hohlraum (2) eine Hohlkammer (3) in dem Felgenkörper (51) bildet,
wobei mehrere Komponentenwände (4) gebildet werden, wobei die Komponentenwände zwei seitliche Felgenflanken (54, 55), einen radial inneren Felgenboden (55) und ein radial äußeres Felgenbett (56) umfassen, welche die Hohlkammer (3) begrenzen,
wobei eine Tragstruktur (5) des Felgenkörpers (1) (1) durch wenigstens eine Faserstruktur (11-14) gebildet wird,
wobei zur Herstellung der Faserstruktur (11-14) ein Faserbündel (15) auf einer Trägerschicht (20) mit Fadenelementen (19) befestigt wird und auf der Trägerschicht (20) hin und her geführt wird, um eine Grundfaserlage (21) der Faserstruktur (11-14) zu bilden,
wobei die wenigstens eine Faserstruktur (11-14) in einer Werkzeugform (40) drapiert wird, und wobei eine Fülleinheit (55) in der Werkzeugform (40) platziert wird, sodass die Fülleinheit (45) das Volumen für den Hohlraum (2) freihält und von der Komponentenwand (4) umgeben wird.

2. Verfahren nach dem vorhergehenden Anspruch, wobei sich wenigstens eine Faserstruktur (11-14) über einen erheblichen Anteil des Umfangs quer zu der Drehachse (53) des Felgenkörpers (1) und über wenigstens ein Viertel erstreckt.

3. Verfahren nach einem der beiden vorhergehenden Ansprüche, wobei eine Faserstruktur (11, 12) einen wesentlichen Teil wenigstens einer Felgenflanke (54) und eine weitere Faserstruktur (13) das Felgenbett (57) bilden.

4. Verfahren nach dem vorhergehenden Anspruch, wobei eine andere Faserstruktur einen wesentlichen Teil der anderen Felgenflanke (55) bildet.

5. Verfahren nach einem der vorhergehenden Ansprüche, wobei radial außen Felgenhörner (58) ausgebildet werden, wobei ein Felgenhorn durch die die Felgenflanke bildende Faserstruktur (11,12) und die weitere Faserstruktur (13) gebildet wird, wobei die die Felgenflanke bildende Faserstruktur (11,12) am radial äußeren Ende (11c, 12c) die weitere Faserstruktur (13) radial nach außen abdeckt oder umgibt.

6. Verfahren nach einem der vorhergehenden Ansprüche, wobei die die Felgenflanken bildenden Faserstrukturen (11, 12) jeweils den gleichen Außendurchmesser (11b) und unterschiedliche Innendurchmesser (11a, 12a) aufweisen und wobei die die Felgenflanken bildenden Faserstrukturen (11, 12) jeweils kreisringförmig ausgebildet sind.

7. Verfahren nach einem der vorhergehenden Ansprüche, wobei eine Faserstruktur (14) auf den Felgenboden (56) aufgebracht wird.

8. Verfahren nach einem der vorhergehenden Ansprüche, wobei bei wenigstens einer Faserstruktur (11-14) mit dem Faserbündel (15) auf der Grundfaserlage (21) wenigstens abschnittsweise wenigstens eine weitere Faserlage (22) abgelegt und befestigt wird, um auf der Grundfaserlage (21) eine flächige weitere Faserlage (22) aufzubringen und zu befestigen, sodass die Faserstruktur (11-14) an definierten Abschnitten (24) stärker ausgebildet ist als in anderen Bereichen (25).

9. Verfahren nach einem der vorhergehenden Ansprüche, wobei das Faserbündel (15) mit einem Fadenelement (19) auf der Trägerschicht (20) oder eine Faserlage (21, 22) der Faserstruktur (11-14) aufgenäht oder aufgestickt wird und wobei wenigstens ein Fadenelement (19) aus einem thermoplastischen Material besteht und wobei das Faserbündel (15) wenigstens zwei Fasern (16) umfasst und wobei das Faserbündel (15) Verstärkungsfasern (17) umfasst.

10. Verfahren nach einem der vorhergehenden Ansprüche, wobei das Faserbündel (15) Fasern (18) aus Matrixmaterial umfasst und wobei die Fasern (18) aus dem Matrixmaterial aufgeschmolzen werden, um gemeinsam mit den Verstärkungsfasern (17) wenigstens einen Teil des Komponentenkörpers (1) zu bilden.

11. Verfahren nach einem der vorhergehenden Ansprüche, wobei die Trägerschicht (20) nach dem Herstellen der Faserstruktur (11-14) entfernt wird.

12. Verfahren nach einem der vorhergehenden Ansprüche, wobei die Faserstrukturen dreidimensional vorgeformt werden und mit einem Faserbinder in ihrer dreidimensionalen Form gesichert werden und dann in die Werkzeugform eingelegt werden.

13. Verfahren nach einem der vorhergehenden Ansprüche, wobei die Werkzeugteile der Werkzeugform geschlossen werden und Matrixmaterial (6) injiziert wird.

14. Verfahren nach einem der vorhergehenden Ansprüche, wobei das Fadenelement (19) in dem Komponentenkörper (1) erhalten bleibt oder wobei das Fadenelement (19) bei dem Fertigstellen des Komponentenkörpers (1) wenigstens teilweise aufgeschmolzen wird.

15. Fahrradfelge (50) mit einem Felgenkörper (1) wenigstens einem darin integrierten Hohlraum (2),
wobei sich der Felgenkörper (1) in einer Felgenebene (52) über einen Umfang von 360° quer zu seiner Drehachse (53) erstreckt,
und wobei der Hohlraum (2) eine Hohlkammer (3) in dem Felgenkörper (1) bildet,
wobei mehrere Komponentenwände (4) umfasst sind, wobei die Komponentenwände zwei seitliche Felgenflanken (54, 55), einen radial inneren Felgenboden (55) und ein radial äußeres Felgenbett (56) umfassen, welche die Hohlkammer (3) begrenzen, wobei der Hohlraum (2) ringsum von wenigstens einer umgebenden Komponentenwand (4) umschlossen wird,
wobei eine Tragstruktur (5) des Komponentenkörpers (1) durch wenigstens eine Faserstruktur (11-14) gebildet wird,
wobei die Faserstruktur (11-14) ein Faserbündel (15) umfasst, welches innerhalb der Faserstruktur (11-14) hin und her geführt und (aneinander) mit Fadenelementen (19) befestigt ist, wobei der Felgenkörper wenigstens teilweise aus einem Faserverbundwerkstoff besteht, wobei die Fasern des Faserverbundwerkstoffs auf eine Trägerschicht aufgestickt sind.
